# EUROPEAN PATENT SPECIFICATION

(11) **EP 0 218 298 B1**
(45) Date of publication and mention of the grant of the patent: **30.03.1994**
(21) Application number: 86201703.5
(22) Date of filing: 02.10.1986
(51) Int. Cl.: C08F 8/30

(54) **Solid polymeric stabilizer compounds and process for their manufacturing**
Polymerer Stabilisierungsfeststoff und Verfahren zu dessen Herstellung
Composé stabilisant solide et polymère et son procédé de préparation

(30) Priority: 09.10.1985 IT 2240885
(43) Date of publication of application: 15.04.1987
(73) Proprietor: ENIRICERCHE S.p.A., 20121 Milano (IT)
(72) Inventor: Roggero, Arnaldo, I-20097 San Donato Milanese (IT); Bertolini, Guglielmo, I-27100 Pavia (IT); Busetto, Carlo, I-20097 San Donato Milanese (IT)
(74) Representative: Fusina, Gerolamo

(56) References cited:
- FR-A- 2 075 489
- FR-A- 2 437 417
- FR-A- 2 437 418
- US-A- 3 402 162
- US-A- 4 377 666
- Kunststoff-Lexikon, 4th Edition, Carl Hanser Verlag München 1967, page 330

## Description

The present invention relates to a process for preparing a solid polymeric stabilizer compound, and to stabilized polymeric compositions comprising an organic polymer and a stabilizing amount of the solid polymeric stabilizer compound prepared by said process.

It is known that the organic polymers, such as polystyrene, polyolefins and polydienes undergo degradation in time because of the effect of their exposure to the atmospheric agents, and, in particular, U.V.light. This degradation leads to a decay of the physical characteristics of the polymers, such as the lowering of the ultimate tensile strength and flexibility, which are accompanied by a change in the viscosity index.

In order to counteract such a degradatation, it is known to introduce into the organic polymers small amounts of stabilizer compounds, generally phenols or sterically hindered amines.

Accordingly, as stabilizers for such organic polymers, a few derivatives of pyrrolidine (US-A-4 325 864, and US-A-4 346 188), and also of tetramethylmorpholine or pentamethylmorpholine (EP-A-0 155 055), have been suggested.

Problems which arise in the stabilization of the organic polymers essentially derive from the incompatibility of the organic polymer concerned with the stabilizer, and release of the stabilizer by the polymer. When stabilization is carried out with the stabilizing agents of the prior art, these undesirable problems occur to different extents.

Consequently, there is a need for compounds which are both compatible with the organic polymers and capable of being retained more stably therein.

A solution of these problems is disclosed in EP-A-0 162 524, which describes stabilizer compounds containing a sterically hindered amine group and a hydrolyzable silyl function in the same molecule. These stabilizer compounds hydrolyze at the silyl function, or are caused to interact with an inorganic solid support which contains superficial hydroxy groups, or are reacted with an organic polymer provided with ethylenic unsaturations, in all cases giving rise to complex structures which remain inside the organic polymer into which they are incorporated, and which are stabler than the conventional sterically hindered amines.

It has been observed, however, that the stabilizer compounds containing a sterically-hindered amine group and a silyl function in the same molecule are poorly reactive towards supports, in particular polymeric supports, so that it proves difficult to link an adequate amount of the stabilizer to the support.

Moreover, the complex structures disclosed in EP-A-0 162 524 are often not completely satisfactory in terms of their homogeneity with the organic polymers, and their compatibility therewith.

FR-A-2 075 489 (D1) discloses a class of polymers which carry secondary amine groups which are obtained by reaction of N-alkoyl-lactams with high molecular weight, alkali metal carrying organic compounds (Page 1, lines 17-23). The high-molecular-weight organic compounds are generally polymers and the introduction of the alkali metal , or metalation, can take place either with the living polymer procedure and, if so, the alkali metal sticks to the chain end, or by metalating the polymer with metalating agents such as lithium alkyls and, in this case, the alkali metal is scattered all along the polymer chain. In either case the metalated polyer is reacted with an N-alkoyl lactam (formula on page 2, line 36) to produce polymers having secondary amine groups (formula on page 3, line 17 of D1).

The presence of the amine groups having the structure: 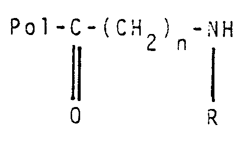
renders the polymer (Pol ) reactive and capable of futher reactions, such as grafting (page 3, lines 23-26 of D1).

US-A-4 377 666 (D2) discloses the reaction of living diene polymers with an alkali metal at the chain end, with particular coupling agents which carry a sterically hindered substituted hydroxyphenyl moiety.

Thereby the molecular weight of the polymer can be increased by coupling, and, concurrently, the polymer can be stabilized by the introduction of the sterically hindered substituted hydroxyphenyl moiety (Col.1 ,lines 56-62 of D2).

The coupling agents are listed from Col.2, line 13 to Col.3, line 46 of D2.

It will be observed that the sterically hindered group is a substituted hydroxyphenyl group in D2, rather than an amine group.

The purpose of the present invention is therefore to overcome the aforementioned drawbacks of the known art, on the basis of the observation that the products obtained by introducing metal atoms in the organic polymers bearing hydrogen atoms which are replaceable by metal atoms, are readily reacted with the sterically hindered amine compounds carrying in their molecule a reactive electrophilic function, such as a carbonyl function, and that the product deriving from this reaction can be obtained in a solid subdivided form which can easily be homogeneized with the organic polymers.

Accordingly, it is now possible to produce, in a simple and convenient way, solid polymeric stabilizer compounds containing the desired amount of active nitrogen, in a physical form which is easily homogeneized with the organic polymers, and which compounds, one the one hand, retain unchanged the stabilizer characteristics which are proper of the sterically hindered amines, and, on the other hand, display an extremely high compatibility and persistence inside the organic polymers.

This invention, therefore, provides a process for preparing a solid polymeric stabilizing compound consisting of a solid polymeric matrix, whereto groups which contain a sterically hindered amine function are bonded, said stabilizing compound having a molecular weight of from 1000 to 100,000 and a minimum active nitrogen content of 0.14% by weight, characterized in that it comprises the step of reacting, at a temperature of from 0°C to 150°C and for a time of from 30 min to 6 hours:
a compound carrying both a sterically hindered amine function and a carbonyl function, selected from:
2,2,6,6-tetramethyl-4-piperidone;
3,3,5,5-tetramethylmorpholin-2-one;
1,3,3,5,5-pentamethylpiperazin-2-one;
2,2,5,5-tetramethylimidazolin-4-one, and
1,3,3-trimethyldecahydroquinoxalin-2-one,
with
a metalated organic polymer selected from:
polymethylstyrene;
poly-2,6-dimethy1-1,4-phenylether;
polybutadiene;
polyisoprene;
an ethylene-propylene-diene terpolymer;
a styrene-butadiene copolymer, and
a random copolymer or block copolymer of vinylaromatic-, diene- or olefin monomers with alkylvinylethers.

According to an embodiment, the process is carried out according to the following sequential steps:
- Dissolution, in an inert organic solvent, of a vinyl-aromatic, dienic or olefin polymer, containing hydrogen atoms replaceable by metal atoms;
- At least partial replacement with metal atoms of the hydrogen atoms replaceable by metal atoms of said vinylaromatic, dienic or olefin polymer by reaction with a metalating agent;
- Reaction of the metalated polymer with a compound bearing a sterically hindered amine function and an electrophilic function, such as a carbonyl , to form a polymeric stabilizer compound;
- Separation of said compound from the reaction mixture in the form of a subdivided solid.

The metalation of the organic polymer is carried out by dissolving the polymer concerned, selected from those listed in Claim 1 hereof, in an organic solvent selected from liquid aliphatic, cycloaliphatic or aromatic hydrocarbons, and contacting the solution with a metalating agent selected from metal alkyls of from 1 to 12 carbon atoms, metal hydrides or metal amides of an alkali metal selected from Li , Na, and K, at a temperature of from 0°C to 80°C and for a time of from 30 min to 6 hours, the amount of metalating agent being from 0.1 mol to 1 mol per each monomeric unit of the polymer concerned, optionally in the presence of an activator selected from:
N, N, N', N'-tetramethylethylenediamine;
potassium tert.butoxide, and diazobicyclooctane,
the molar ratio of the metalating agent to the activator being from 1:0.1 to 1:10.

It is preferred that the metalated organic polymer is reacted with a stoichiometric amount of the compound carrying both a sterically hindered amine function and a carbonyl function.

It is also preferred that the temperature of preparation is from 40°C to 80°C.

Another preferred embodiment is that in which the metalated organic polymer is a metalated poly-p.methylstyrene. A preferred range for the active nitrogen content in the stabilizing compound is from 0.14% to 5.4%. The metalation of organic polymers in general is discussed, among others, by A.J.Chalk et Al., J.Polym.Sci., A-1, 7, 691 (1969); J.C.Brusse et al., Makromol.Chem.,183, 2193 (1982); D.P.Tate et al., J.Pol.Sci., A-1, 9, 139 (1971), and A.J.Amass et al., Eur.Polym.J., 8, 781 (1972).

The polymers which can be metalated to the purposes of the present invention are those listed in Claim 1 hereof. These polymers have a molecular weight which is in the same order of magnitude as that of the expected polymeric solid stabilizer, otherwise, account will be taken of the circumstance that, in the metalation process, a degradation of the molecular weight may sometimes occur.

The metalating agents to be used to the purposes of the present invention, and their possible activators, are those indicated in the foregoing.

The yield of the metalating run, when carried out under the conditions set forth in the foregoing, is of from 30% to 90%, relative to the metalating agent used.

Best results are obtained when Li-alkyls are the metalating agents, the range of the molar ratio of the replaceable-hydrogen-containing polymeric units to the metalating agents being from 1:0.1 to 1:10, a preferred range being from 1:0.5 to 1:1.

For example, when the polymer containing hydrogen atoms replaceable by hydrogen atoms is poly-p.methylstyrene, and the metalating agent is an Li-alkyl, with N, N, N', N'-tetramethylethylenediamine as the activator, a metalated poly-p.methylstyrene is obtained, having the formula: 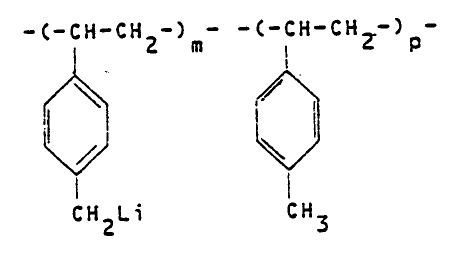
wherein $\text{m + p = n}$ , the ratio of m to p depending on the molar ratio of the metalating agent to the polymeric units of the metalatable polymer.

Obviously, the polymeric units containing metal atoms will be randomly distributed in the polymer chain, the above formula being used for simplification.

The possibility exists of metal atoms being introduced to a reduced extent on the aromatic ring and/or on the -CH-group of the styrene chain.

It appears, in any case, that the extent of the replacement of the hydrogen atoms by metal atoms in the compound containing replaceable hydrogen atoms can be varied within wide ranges by simply varying the ratio between the reactants.

The sterically hindered amines which also contain the electrophilic carbonyl required for promoting the reaction with the metalated organic polymer have been specified in the foregoing, and, among them, 2,2,6,6-tetramethyl-4-piperidone, which can be obtained by reacting acetone with ammonia, is particularly useful. In a preferred embodiment, when a partially metalated poly-p.methylstyrene is caused to react with 2,2,6,6-tetramethyl-4-piperidone, a polymeric stabilizer, having the formula: 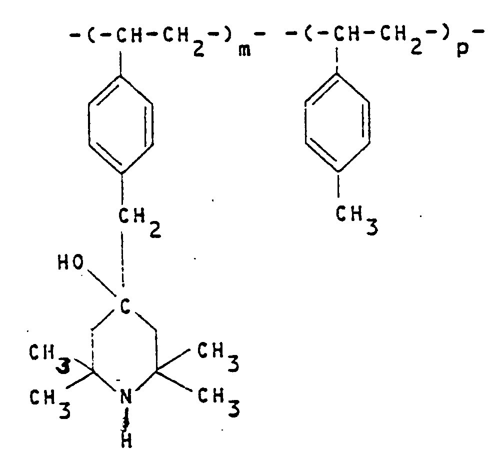
is obtained, which polymeric stabilizer may also contain units having the structure: 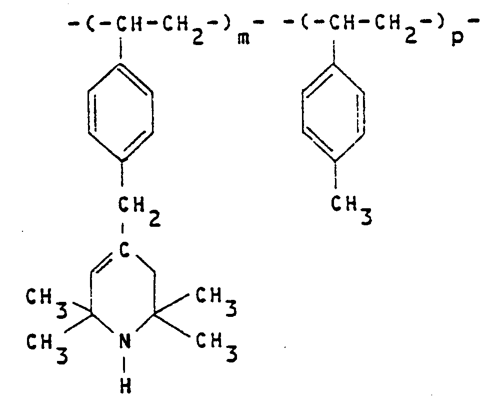
as shown by determining the nitrogen content and by ¹H-NMR measurements.

The spectrum of poly-p.methylstyrene shows broad signals at δ 1.35; 1.85; 2.25 in the aliphatic region, and at δ 6.5 and 6.85 on the aromatic region.

In the copolymer spectrum, a signal at δ 1.1, attributed to the methyl groups of 2,2,6,6,tetramethyl-4-piperidone, is also evident.

The polymeric stabilizer thus obtained can be separated from the reaction mixture by precipitating it with a nonsolvent, such as an alcohol, methanol for example, filtration or centrifuging of the solids and optional washing and drying of same.

By operating as indicated, it is possible to obtain solid polymeric stabilizers easily homogenizable by simple blending them with the powdered organic polymers that one desires to stabilize.

These solid polymeric stabilizers show, furthermore, an exceptionally high heat stability and a very high compatibility with organic polymers, especially whenever the organic polymer is of the same nature as that of the polymer containing replaceable hydrogen atoms used in the preparation of the polymeric stabilizer.

Finally, the solid polymeric stabilizers contemplated herein show no tendency to be extracted from the organic polymers in which they are incorporated,as is demonstrated in the experimental examples.

As indicated above, the solid polymeric stabilizers contemplated herein can also be prepared by polymerizing vinyl-aromatic and/or dienic monomers, such as styrene and butadiene, in the presence of Li-alkyls, by the technique of the living polymers, so as to obtain a partially metalated (Li) polymer. The metalated polymer is subsequently reacted with a sterically hindered amine of the kind referred to above, and the relevant product can also be employed to form a stabilized composition: in the experimental section, some examples of such a procedure are reported.

The solid polymeric stabilizers contemplated herein have usually a content of active nitrogen of from 0,14% to 5,4% by weight: this content can be adjusted as a function of the degree of metalation of the metalatable polymer used in the synthesis. The preferred molecular weight range for the stabilizer is from 1000 to 50.000. Thus, account has been taken of both the solubility in the preparation step, and the performance of the stabilizer, which is the best when the average molecular weight of the stabilizer is lower than that of the organic polymer to be stabilized.

With the solid polymeric stabilizers contemplated herein, it is possible to stabilize a number of organic polymers. Therefore, another aspect of the present invention is that of stabilized polymeric compositions, which are characterized in that they consist of an organic polymer selected from:
polyolefins;
polydiolefins;
monoolefin-diolefin copolymers;
polystyrenes;
copolymers of dienes and vinylaromatic monomers;
polyphenylene oxides;
polyphenylene sulphides;
polyurethanes;
polyamides and copolyamides;
polyureas;
polyimides and polyamideimides;
polyesters;
polycarbonates;
polysulphones and polyethersulphones;
unsaturated polyesters, and
natural rubbery polymers, and an amount of the solid stabilizer compound contemplated herein, such as to provide a content of active nitrogen of from 0.005% to 0.02% by weight for the overall composition, the average molecular weight of the stabilizer being lower than the average molecular weight of the organic polymer to be stabilized.

The range of active nitrogen of from 0.005% to 0.02% by weight for the overall composition has proven to provide an adequate stabilizing effect.

The preferred content of active nitrogen for the overall composition is 0.015% by weight.

The term "active nitrogen" as used herein is intended to be the nitrogen supplied by the sterically hindered amine group.

Stabilized polymeric compositions according to this invention can be prepared by any conventional procedure as used to homogenize an organic polymer with a stabilizer.

It is preferred to simply blend the powdered organic polymer to be stabilized with the powdered solid polymeric stabilizer.

The invention is best illustrated by the ensuing examples.

### EXAMPLE 1

A 1-litre glass reactor equipped with mechanical stirrer, temperature and pressure gauges, and means for the supply of the reactants and inert gas, is charged with 360 ml of cyclohexane, 10 g of poly-p.methylstyrene, (weight average molecular weight, M_{w} = 14500, number average molecular weight Mₙ = 13500, ${\text{M}}_{\text{w}} {\text{/M}}_{\text{n}} \text{= 1.07}$ ), and, after heating to the temperature of 60°C and dissolving the p.methyl styrene polymer in the solvent, 40 mmol (25 ml of 1.6M solution in hexane) are added of Li-n.butyl which has been previously reacted by contacting it with 40 mmol (4.64 g ) of N,N,N',N'-tetramethylethylenediamine for 10 min, at room temperature (20°C-25°C).

The reaction is carried out for 2 hours at 60°C and under a nitrogen blanket, the reaction mass being continuously stirred. Thereupon, an aliquot (1/10, or so) of the reaction mixture is withdrawn and contacted with trimethylchlorosilane in order to detect the achieved degree of metalation, which proves to be 1 metal atom per 5 monomeric units of the p.methylstyrene polymer.

2,2,6,6-tetramethyl-4-piperidone is added to the remaining mixture in the amount of 2.6 g, ie. an amount which is stoichiometrically equivalent to the carbanionic centres produced in poly-p.methylstyrene.

The mixture is kept stirred, at the temperature of 60°C for 30 min, and methanol is then added to precipitate a powder-like solid, which is separated and dried in a vacuo.

The elemental analysis of this solid indicates the presence of 1% by weight, or so, of nitrogen, and, according to this data, NMR analysis confirms that 1 unit, or so, of any 10 monomeric units of poly-p.methylstyrene contains the bound piperidine function.

### EXAMPLE 2

The process is carried out in a way similar to that of Example 1, by dissolving 10 g of polyphenylene oxide (molecular weight 15000, or so) in tetrahydrofuran, so as to form a 2% by weight solution.

To this solution, Li-n.butyl is added (52 ml of a 1.6M solution in cyclohexane, ie., in an amount of 1 mol per monomeric units of the polymer).

The so obtained mixture is kept stirred, at the temperature of 20°C and under a nitrogen blanket over 1 hour. 2,2,6,6-tetramethyl-4-piperidone is then added (8.7 g, an amount equal to 70% molar relative to the previously charged Li-n.butyl ), and the mixture is kept stirred at room temperature (20°C-25°C) during a few hours, under a nitrogen blanket. To the reaction mixture methanol is then added, causing a solid in powder form to precipitate, which is separated and dried.

Upon analysis, this solid shows a content of 0.7 bound piperidine units per monomeric unit of polyphenylene oxide.

### EXAMPLE 3

The process is carried out in a way similar to Example 1 by dissolving 6.4 g of polyisoprene (molecular weight 20000) in 200 ml of cyclohexane.

46 mmol of Li-sec.butyl (28.8 ml of a 1.6M solution in cyclohexane) are then added, as well as 23 mmol (2.67 g) of N,N,N',N'-tetramethylethylenediamine, and the mixture is reacted with stirring, under a nitrogen blanket, for 4 hours, at room temperature (20°C-25°C).

10 ml of tetrahydrofuran, and subsequently 18.4 mmol (2.85 g) of 2, 2, 6, 6-tetramethyl-4-piperidone are added.

After further reaction, under the above indicated conditions, for 30 min, the solvents are evaporated off in a vacuo, and a residual solid product is obtained, which, after purification by redissolution in cyclohexane and precipitation by methanol, shows a content of 0.15 bound units of piperidone, or so, per unit of isoprene.

### EXAMPLES 4-7

The process is carried out as in Example 1, by respectively using equivalent amounts of:
a) 3,3,5,5-tetramethylmorpholin-2-one;
b) 1,3,3,5,5-pentamethylpiperazin-2-one;
c) 2,2,5,5-tetramethylimidazolin-4-one, and
d) 1,3,3-trimethyldecahydroquinoxalin-2-one, in lieu of the piperidone of Example 1.

A solid is obtained, which shows an average of one nitrogeneous function per 10 monomeric units of poly-p.methylstyrene.

### EXAMPLE 8

5 g of p.methylstyrene-octadecylvinylether copolymer of a molecular weight 10000, and containing 30% of p.methylstyrene, is dissolved in 200 ml of anhydrous cyclohexane.

To this solution,there are added 13 mmol of (Li-n.butyl-N,N,N',N'-tetramethylethylenediamine) complex prepared by interaction of the two components at room temperature. The reaction is carried out over 2 hours at 60°C.

5 ml of anhydrous tetrahydrofuran are then added, supplemented, a few minutes later, by 7 mmol of 2,2,6,6-tetramethylpiperidin-4-one. By precipitation from methanol, a solid product is isolated, which has a content of amine compound of 13% by weight.

### EXAMPLE 9

a) The solid polymeric stabilizer obtained in Example 1 briefly symbolized here as POL-AO-1 , is submitted to thermogravimetric analysis, under an inert gas blanket, and with a programmed temperature (10°C/min).
In the following Table , the percent weight loss values for the POL-AO-1 stabilizer are reported, within different temperature ranges. These are compared with the values obtained by using the commercial stabilizers known under the Registered Trade Marks TINUVIN 770 and CHIMASSORB 944.
TIMUVIN 770® is a commercial product sold by CIBA-GEIGY and contains bis(2,2,6,6-tetramethyl-4-piperidinyl) sebacate.
CHIMASSORB 994® is a commercial product sold by CIBA-GEIGY and contains a sterically hindered amine of polymeric type.

**TABLE**

| **STABILIZER** | **ΔT 35°C-230°C** | **ΔT 230°C-280°C** | **ΔT→395°C** |
|---|---|---|---|
| | Weight Loss % | | |
| TINUVIN 770® | 1.3 | 20.1 | 100.0 |
| CHIMASSORB 944® | 0.3 | 0.3 | 14.5 |
| POL-AO-1 | 0.1 | 0.1 | 6.8 |

Thus, the stabilizer POL-AO-1 proves to be stable also at high temperatures, and this characteristic renders it particularly useful as a long-term stabilizer in polymeric compositions, showing virtually no breakdown or transformation phenomena in the temperature range where polymeric compositions are usually processed.
Similar stability characteristics are observed for the solid polymeric stabiliers of the other Examples hereof.
b) The stabilizer activity of POL-AO-1 is verified on the basis of its ability to inhibit the degradation of polystyrene submitted to the action of U.V.light. The incorporation of the stabilizer in polystyrene is accomplished in a powder-mixing equipment.
In particular, a powdered commercial polystyrene by MONTEDISON, having a weight average molecular weight M_{w} = 234000, a number average molecular weight Mₙ = 55000, with an M_{w}/Mₙ ratio of 4.25 is homogenized with the powdered POL-AO-1 stabilizer, in such an amount as to produce, in the final composition, a content of active nitrogen equal to 0,015% by weight.
The final composition is press-moulded at 135°C, under a pressure of 882.6 bar (900 kg/cm2) for 2 min, a 50 µm-thick film being thus obtained. The film withdrawn from the press is rapidly quenched under running water and submitted to accelerated ageing within an UVCON® device by ATLAS Co., with alternating cycles of irradiation by fluorescent lamps rich with 280 nm to 350 nm wavelength U.V.rays.
More particularly, in the case under examination, a cycle of irradiation of 8 hours at 60°C and 4 hours of condensation at 40°C is imposed.
The degradation of the polystyrene is checked on the basis of the formation of carbonyl compounds (CO-Index) as evidenced by the I.R.spectrum.
In particular, the CO-Index is determined as a function of the increase of the absorption at 1710 cm⁻¹.
In the present test, the increase of the absorption at 1710 cm⁻¹ is measured, within a time interval of 100 hours, for:
1) a virgin polystyrene film;
2) a polystyrene film containing the stabilizer POL-AO-1;
3) a polystyrene film obtained in the previously indicated way, and containing the commercial stabilizer TINUVIN 770® in such an amount as to have an active nitrogen contents of 0.015% by weight.

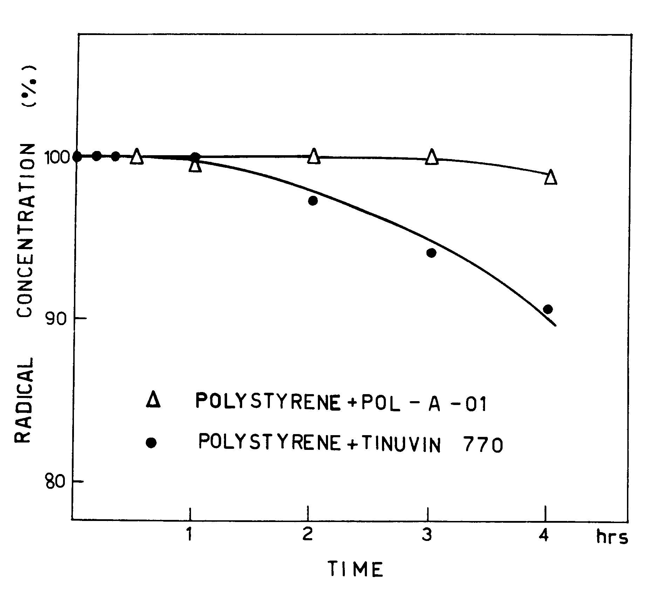

The Figure shows a graphic representation of the comparison of the persistence of the stabilizer of this invention with that of a commercial stabilizer.
In the case (1) of the polystyrene film with no aditives, an increase in the CO-Index of 0.2 is observed, while in the other two cases, no formation of carbonyl bands is observed during the time interval considered. A similar behaviour is observed with the solid polymeric stabilizers of Examples 4 to 7.
c) The compatibility of the stabilizer, POL-AO-1, with polystyrene and its persistence in the mass of the same polymer under a high thermal stress are checked by measuring the steady-state concentration of the nitroxy radical, obtained by oxidation of the sterically hindered amine group of the stabilizer molecule. The measurements were made using ESR spectra, which were directly performed on polymer samples containing the stabilizer, and kept a few hours at 170°C. In particular, the formation of nitroxy radicals is directly induced in the polysturene film by photosensitized oxidation with oxygen singlet.
Thepolystyrene film is obtained as previously described.
The amount of the stabilizer, POL-AO-1, is equal to 2.5% by weight, corresponding to 0.015% by weight of active nitrogen. The photosensitizer, (Rose Bengal, chlorophyll), is added in the amount of 0.1% by weight relative to the polymer. The film is then exposed to U.V.irradiation of 18 hours, with a high-pressure, 150-W mercury vapour lamp, coupled to an UV 31 filter, which secures a passing band of radiations at 290 nm. After irradiation on a weighed film portion, the test is carried out, by means of ESR spectra, of the formation of the radical and its persistence in the sample at the temperature of 170°C.
The results of this test are reported in the chart of the single Figure, wherein the ordinate is the radical concentration (as percentage relative to the starting concentration), and the abscissa is the time in hours. For comparison, the trend is reported, for a film of the same polystyrene, containing the commercial stabilizer TINUVIN 770®, in such an amount as to give a level of active nitrogen of 0,015%.
In the Figure, the results of the test for the product of the invention are shown by (x), whereas the results of the comparative test are indicated by (o).
A similar behaviour has been observed by using the solid polymeric stabilizers of the Examples from 4 to 7 hereof.
d) The polystyrene films, containing the stabilizer POL-O-1, obtained as previously described, are finally submitted to extraction tests, carried out at 60°C for 24 hours, with 2%-by-wt-aqueous.solutions of alkaline detergents.
Essentially no extraction of the stabilizer from the polymeric films has been observed.

## Claims (Claims for the following Contracting State(s): BE CH DE FR GB LI LU NL SE)

1. Process for preparing a solid polymeric stabilizing compound consisting of a solid polymeric matrix, whereto groups which contain a sterically hindered amine function are bonded, said stabilizing compound having a molecular weight of from 1000 to 100.000 and a minimum active nitrogen content of 0.14% by weight, characterized in that it comprises the step of reacting, at a temperature of from 0°C to 150°C and for a time of from 30 min to 6 hours:
a compound carrying both a sterically hindered amine function and a carbonyl function, selected from:
2,2,6,6-tetramethyl-4-piperidone;
3,3,5,5-tetramethylmorpholin-2-one;
1,3,3,5,5-pentamethylpiperazin-2-one;
2,2,5,5-tetramethy1imidazolin-4-one, and
1,3,3-trimethyldecahydroquinoxalin-2-one,
with
a metalated organic polymer selected from:
polymethylstyrene;
poly-2,6-dimethyl-1,4-phenylether;
polybutadiene;
polyisoprene;
an ethylene-propylene-diene terpolymer;
a styrene-butadiene copolymer, and
a random copolymer or block copolymer of vinylaromatic-, diene- or olefin monomers with alkylvinylethers.

2. Process according to Claim 1, wherein the temperature of preparation is from 40°C to 80°C.

3. Process according to Claim 1, wherein the metalated organic polymer is a metalated poly-p.methylstyrene.

4. Process according to Claim 1 or 2, wherein the active nitrogen content is from 0.14% to 5.4% by weight.

5. Process according to any of the Claims 1 to 4, wherein the organic polymer metalation is caused to take place by dissolving the polymer concerned in an inert organic solvent selected from liquid aliphatic, cycloaliphatic or aromatic hydrocarbons, and contacting the solution with a metalating agent selected from metal alkyls of from 1 to 12 carbon atoms, metal hydrides or metal amides of an alkali metal selected from Li , Na, and K, at a temperature of from 0°C to 80°C and for a time of from 30 min to 6 hours, the amount of metalating agent being from 0.1 mol to 1 mol per each monomeric unit of the polymer concerned, optionally in the presence of an activator selected from N,N,N,N'-tetramethylethylenediamine, potassium tert.butoxide, and diazobicyclooctane, the molar ratio of the metalating agent to the activator being from 1:0.1 to 1:10.

6. Process according to Claim 1, wherein the metalated organic polymer is reacted with a stoichiometric amount of the compound carrying both a sterically hindered amine function and a carbonyl function.

7. Stabilized polymeric compositions, characterized in that they consist of an organic polymer selected from:
polyolefins;
polydiolefins;
monoolefin-diolefin copolymers;
polystyrenes;
copolymers of dienes and vinylaromatic monomers;
polyphenylene oxides;
polyphenylene sulphides;
polyurethans;
polyamides and copolyamides;
polyureas;
polyimides and polyamideimides;
polyesters;
polycarbonates;
polysulphones and polyethersulphones;
unsaturated polyesters, and
natural rubbery polymers, and an amount of the solid stabilizer compound contemplated herein, such as to provide a content of active nitrogen of from 0.005% to 0.02% by weight for the overall composition, the average molecular weight of the stabilizer being lower than the average molecular weight of the organic polymer to be stabilized.

8. A stabilized polymeric composition according to Claim 7, wherein the content of active nitrogen is 0.015% by weight for the overall composition.

## Claims (Claims for the following Contracting State(s): AT, ES)

1. Process for preparing a solid polymeric stabilizing compound consisting of a solid polymeric matrix, whereto groups which contain a sterically hindered amine function are bonded, said stabilizing compound having a molecular weight of from 1000 to 100.000 and a minimum active nitrogen content of 0.14% by weight, characterized in that it comprises the step of reacting, at a temperature of from 0°C to 150°C and for a time of from 30 min to 6 hours:
a compound carrying both a sterically hindered amine function and a carbonyl function, selected from:
2,2,6,6-tetramethyl-4-piperidone;
3,3,5,5-tetramethylmorpholin-2-one;
1,3,3,5,5-pentamethylpiperazin-2-one;
2,2,5,5-tetramethylimidazolin-4-one, and
1,3,3-trimethyldecahydroquinoxalin-2-one,
with
a metalated organic polymer selected from:
polymethylstyrene;
poly-2,6-dimethyl-1,4-phenylether;
polybutadiene;
polyisoprene;
an ethylene-propylene-diene terpolymer;
a styrene-butadiene copolymer, and
a random copolymer or block copolymer of vinylaromatic-, diene- or olefin monomers with alkylvinylethers.

2. Process according to Claim 1, wherein the temperature of preparation is from 40°C to 80°C.

3. Process according to Claim 1, wherein the metalated organic polymer is a metalated poly-p.methylstyrene.

4. Process according to Claim 1 or 2, wherein the active nitrogen content is from 0.14% to 5.4% by weight.

5. Process according to any of the Claims 1 to 4, wherein the organic polymer metalation is caused to take place by dissolving the polymer concerned in an inert organic solvent selected from liquid aliphatic, cycloaliphatic or aromatic hydrocarbons, and contacting the solution with a metalating agent selected from metal alkyls of from 1 to 12 carbon atoms, metal hydrides or metal amides of an alkali metal selected from Li , Na, and K, at a temperature of from 0°C to 80°C and for a time of from 30 min to 6 hours, the amount of metalating agent being from 0.1 mol to 1 mol per each monomeric unit of the polymer concerned, optionally in the presence of an activator selected from N,N,N,N'-tetramethylethylenediamine, potassium tert.butoxide, and diazobicyclooctane, the molar ratio of the metalating agent to the activator being from 1:0.1 to 1:10.

6. Process according to Claim 1, wherein the metalated organic polymer is reacted with a stoichiometric amount of the compound carrying both a sterically hindered amine function and a carbonyl function.

## Patentansprüche (Patentansprüche für folgende(n) Vertragsstaat(en): BE, CH, DE, FR, GB, LI, LU, NL, SE)

1. Verfahren zur Herstellung einer festen, polymeren Stabilisatorverbindung, bestehend aus einer festen Polymermatrix, an die Gruppen gebunden sind, die eine sterisch gehinderte Aminfunktion enthalten, welche Stabilisatorverbindung ein Molekulargewicht von 1.000 bis 100.000 und einen Mindestgehalt an aktivem Stickstoff von 0,14 Gew.-%` aufweist, dadurch gekennzeichnet, daß es die Stufe des Umsetzens einer Verbindung, die sowohl eine sterisch gehinderte Aminfunktion als auch eine Carbonylfunktion trägt, ausgewählt unter:
2,2,6,6-Tetramethyl-4-piperidon;
3,3,5,5-Tetramethylmorpholin-2-on;
1,3,3,5,5-Pentamethylpiperazin-2-on;
2,2,5,5-Tetramethylimidazolin-4-on und
1,3,3-Trimethyldecahydrochinoxalin-2-on,
mit einem metallierten organischen Polymer, ausgewählt unter:
Polymetbylstyrol;
Poly-2,6-dimethyl-1,4-phenylether;
Polybutadien;
Polyisopren;
einem Ethylen-Propylen-Dien-Terpolymer;
einem Styrol-Butadien-Copolymer und
einem Randomcopolymerprodukt oder Blockcopolymer von vinylaromatischen Dien- oder Olefinmonomeren mit Alkylvinylethern,
bei einer Temperatur von 0°C bis 150°C und während einer Zeit von 30 min bis 6 h umfaßt.

2. Verfahren nach Anspruch 1, worin die Herstellungstemperatur 40°C bis 80°C beträgt.

3. Verfahren nach Anspruch 1, worin das metallierte organische Polymer ein metalliertes Poly-p-methylstyrol ist.

4. Verfahren nach Anspruch 1 oder 2, worin der Gehalt an aktivem Stickstoff von 0,14 bis 5,4 Gew.-% beträgt.

5. Verfahren nach einem der Ansprüche 1 bis 4, worin die Metallierung des organischen Polymers durch Auflösen des betreffenden Polymers in einem inerten organischen Lösungsmittel, ausgewählt unter flüssigen aliphatischen, cykloaliphatischen oder aromatischen Kohlenwasserstoffen, und Inkontaktbringen der Lösung mit einem Metallierungsmittel, ausgewählt unter Metallalkylen mit 1 bis 12 Kohlenstoffatomen, Metall-hydriden oder Metallamiden eines unter Li, Na und K ausgewählten Alkalimetalles, bei einer Temperatur von 0°C bis 80°C und wahrend einer Zeit von 30 min bis 6 h ablaufen gelassen wird, wobei die Menge an Metallierungsmittel von 0,1 Mol bis 1 Mol je Monomereinheit des betreffenden Polymers beträgt, gegebenenfalls in Gegenwart eines unter N,N,N,N'-Tetramethylethylendiamin, Kalium-tert.butoxid und Diazobioyclooctan ausgewählten Aktivators, wobei das Molverhältnis des Metallierungsmittels zu dem Aktivator von 1:0,1 bis 1:10 beträgt.

6. Verfahren nach Anspruch 1, worin das metallierte organische Polymer mit einer stöchiometrischen Menge der sowohl eine sterisch gehinderte Aminfunktion als auch eine Carbonylfunktion tragenden Verbindung umgesetzt wird.

7. Stabilisierte polymere Zusammensetzungen, dadurch gekennzeichnet, daß sie aus einem organischen Polymer, ausgewählt unter: Polyolefinen; Polydiolefinen; Monoolefin-Diolefin-Copolymeren; Polystyrolen; Copolymeren von Dienen und vinylaromatischen Monomeren; Polyphenylenoxiden; Polyphenylensulfiden; Polyurethanen; Polyamiden und Copolyamiden; Polyharnstoffen; Polyimiden und Polyamidimiden; Polyestern; Polycarbonaten; Polysulfonen und Polyethersulfonen; ungesättigten Polyestern und natürlichen kautschukartigen Polymeren, und einer solchen Menge der hier in Betracht gezogenen festen Stabilisatorverbindung bestehen, daß für die Gesamtzusammensetzung ein Gehalt an aktivem Stickstoff von 0,005 bis 0,02 Gew.-% geschaffen wird, wobei das mittlere Molekulargewicht des Stabilisators niedriger liegt als das mittlere Molekulargewicht des zu stabilisierenden organischen Polymers.

8. Stabilisierte polymere Zusammensetzung nach Anspruch 7, worin der Gehalt an aktivem Stickstoff 0,015 Gew.-% für die Gesamtzusammensetzung beträgt.

## Patentansprüche (Patentansprüche für folgende(n) Vertragsstaat(en): AT, ES)

1. Verfahren zur Herstellung einer festen, polymeren Stabilisatorverbindung, bestehend aus einer festen Polymermatrix, an die Gruppen gebunden sind, die eine sterisch gehinderte Aminfunktion enthalten, welche Stabilisatorverbindung ein Molekulargewicht von 1.000 bis 100.000 und einen Mindestgehalt an aktivem Stickstoff von 0,14 Gew.-% aufweist, dadurch gekennzeichnet, daß es die Stufe des Umsetzens einer Verbindung, die sowohl eine sterisch gehinderte Aminfunktion als auch eine Carbonylfunktion trägt, ausgewählt unter:
2,2,6,6-Tetramethyl-4-piperidon;
3,3,5,5-Tetramethylmorpholin-2-on;
1,3,3,5,5-Pentamethylpiperazin-2-on;
2,2,5,5-Tetramethylimidazolin-4-on und
1,3,3-Trimethyldecahydrochinoxalin-2-on,
mit einem metallierten organischen Polymer, ausgewählt unter:
Polymethylstyrol;
Poly-2,6-dimethyl-1,4-phenylether;
Polybutadien;
Polyisopren;
einem Ethylen-Propylen-Dien-Terpolymer;
einem Styrol-Butadien-Copolymer und
einem Randomcopolymerprodukt oder Blockcopolymer von vinylaromatischen Dien- oder Olefinmonomeren mit Alkylvinylethern, bei einer Temperatur von 0°C bis 150°C und während einer Zeit von 30 min bis 6 h umfaßt.

2. Verfahren nach Anspruch 1, worin die Herstellungstemperatur 40°C bis 80°C beträgt.

3. Verfahren nach Anspruch 1, worin das metallierte organische Polymer ein metalliertes Poly-p-methylstyrol ist.

4. Verfahren nach Anspruch 1 oder 2, worin der Gehalt an aktivem Stickstoff von 0,14 bis 5,4 Gew.-% beträgt.

5. Verfahren nach einem der Ansprüche 1 bis 4, worin die Metallierung des organischen Polymers durch Auflösen des betreffenden Polymers in einem inerten organischen Lösungsmittel, ausgewählt unter flüssigen aliphatischen, cykloaliphatischen oder aromatischen Kohlenwasserstoffen, und Inkontaktbringen der Lösung mit einem Metallierungsmittel, ausgewählt unter Metallalkylen mit 1 bis 12 Kohlenstoffatomen, Metall-hydriden oder Metallamiden eines unter Li, Na und K ausgewählten Alkalimetalles, bei einer Temperatur von 0°C bis 80°C und während einer Zeit von 30 min bis 6 h ablaufen gelassen wird, wobei die Menge an Metallierungsmittel von 0,1 Mol bis 1 Mol je Monomereinheit des betreffenden Polymers beträgt, gegebenenfalls in Gegenwart eines unter N,N,N,N'-Tetramethylethylendiamin, Kalium-tert.butoxid und Diazobicyclooctan ausgewählten Aktivators, wobei das Molverhältnis des Metallierungsmittels zu dem Aktivator von 1:0,1 bis 1:10 beträgt.

6. Verfahren nach Anspruch 1, worin das metallierte organische Polymer mit einer stöchiometrischen Menge der sowohl eine sterisch gehinderte Aminfunktion als auch eine Carbonylfunktion tragenden Verbindung umgesetzt wird.

## Revendications (Revendications pour l'(les) Etat(s) contractant(s) suivant(s): BE, CH, DE, FR, GB, LI, LU, NL, SE)

1. Procédé de préparation d'un composé stabilisant polymère solide, constitué d'une matrice polymère solide, à laquelle sont liés des groupes présentant une fonction amine à empêchement stérique, ledit composé stabilisant ayant une masse moléculaire de 1.000 à 100.000 et présentant une teneur minimale en azote actif de 0,14 % en poids, caraotérisé en ce qu'il comprend l'étape consistant à faire réagir, à une température de 0°C à 150°C, et pendant une durée de 30 minutes à 6 heures, un composé présentant à la fois une fonction amine à empêchement stérique et une fonction carbonyle, choisi parmi la 2,2,6,6-tétraméthyl-4-pipéridone, la 3,3,5,5-tétraméthylmorpholin-2-one, la 1,3,3,5,5-pentaméthylpipérazin-2-one, la 2,2,5,5-tétraméthylimidazolin-4-one et la 1,3,3-triméthyldécahydroquinoxalin-2-one, avec un polymère organique métallé, choisi parmi le poly(méthylstyrène), le poly(2,6-diméthyl-1,4-phénylène éther), le polybutadiène, le polyisoprène, les terpolymères d'éthylène, de propylène et de diène, les copolymères de styrène et de butadiène, et les copolymères, statistiques ou séquencés, de monomères vinylaromatiques, diéniques ou oléfiniques avec des oxydes d'alkyle et de vinyle.

2. Procédé selon la revendication 1, dans lequel la température de préparation est de 40°C à 80°C.

3. Procédé selon la revendication 1, dans lequel le polymère organique métallé est un poly(p-méthylstyrène) métallé.

4. Procédé selon la revendication 1 ou 2, pour lequel la teneur en azote actif du composé est de 0,14 % à 5,4 % en poids.

5. Procédé selon l'une quelconque des revendications 1 à 4, dans lequel on réalise la métallation du polymère organique en dissolvant le polymère concerné dans un solvant organique inerte, choisi parmi les hydrocarbures liquides, aliphatiques, cycloaliphatiques ou aromatiques, et en mettant la solution en contact avec un agent de métallation, choisi parmi les dérivés alkylés ayant 1 à 12 atomes de carbone, les hydrures et les amidures d'un métal alcalin choisi parmi Li, Na et K, à une température de 0°C à 80°C et pendant une durée de 30 minutes à 6 heures, la quantité d'agent de métallation étant de 0,1 mole à 1 mole pour chaque motif monomère du polymère concerné, éventuellement en présence d'un activateur choisi parmi la N,N,N ,N'-tétraméthyléthylènediamine, le tert.-butylate de potassium et le diazabicyclooctane, le rapport molaire de l'agent de métallation à l'activateur étant de 1:0,1 à 1:10.

6. Procédé selon la revendication 1, dans lequel on fait réagir le polymère organique métallé avec une quantité stoechiométrique du composé portant à la fois une fonction amine à empêchement stérique et une fonction carbonyle.

7. Compositions polymères stabilisées, caractérisées en ce qu'elles sont constituées d'un polymère organique, choisi parmi les polyoléfines, les polydioléfines, les copolymères de monooléfines et de dioléfines, les polystyrènes, les copolymères de diènes et de monomères vinylaromatiques, les poly(oxydes de phénylène), les poly(sulfures de phénylène), les polyuréthannes, les polyamides et copolyamides, les polyurées, les polyimides et polyamideimides, les polyesters, les polycarbonates, les polysulfones et polyéthersulfones, les polyesters insaturés, et les polymères naturels caoutchouteux, et d'une quantité du composé stabilisant solide proposé ici, telle qu'elle communique à la composition globale une teneur en azote actif de 0,005 % à 0,02 % en poids, la masse moléculaire moyenne du stabilisant étant inférieure à la masse moléculaire moyenne du polymère organique à stabiliser.

8. Composition polymère stabilisée selon la revendication 7, pour laquelle la teneur en azote actif de la composition globale est de 0,015 % en poids.

## Revendications (Revendications pour l'(les) Etat(s) contractant(s) suivant(s): AT, ES)

1. Procédé de préparation d'un composé stabilisant polymère solide, constitué d'une matrice polymère solide, à laquelle sont liés des groupes présentant une fonction amine à empêchement stérique, ledit composé stabilisant ayant une masse moléculaire de 1.000 à 100.000 et présentant une teneur minimale en azote actif de 0,14 % en poids, caractérisé en ce qu'il comprend l'étape consistant à faire réagir, à une température de 0°C à 150°C, et pendant une durée de 30 minutes à 6 heures, un composé présentant à la fois une fonction amine à empêchement stérique et une fonction carbonyle, choisi parmi la 2,2,6,6-tétraméthyl-4-pipéridone, la 3,3,5,5-tétraméthylmorpholin-2-one, la 1,3,3,5,5-pentaméthylpipérazin-2-one, la 2,2,5,5-tétraméthylimidazolin-4-one et la 1,3,3-triméthyldécahydroquinoxalin-2-one, avec un polymère organique métallé, choisi parmi le poly(méthylstyrène), le poly(2,6-diméthyl-1,4-phénylène éther), le polybutadiène, le polyisoprène, les terpolymères d'éthylène, de propylène et de diène, les copolymères de styrène et de butadiène, et les copolymères, statistiques ou séquencés, de monomères vinylaromatiques, diéniques ou oléfiniques avec des oxydes d'alkyle et de vinyle.

2. Procédé selon la revendication 1, dans lequel la température de préparation est de 40°C à 80°C.

3. Procédé selon la revendication 1, dans lequel le polymère organique métallé est un poly(p-méthylstyrène) métallé.

4. Procédé selon la revendication 1 ou 2, pour lequel la teneur en azote actif du composé est de 0,14 % à 5,4 % en poids.

5. Procédé selon l'une quelconque des revendications 1 à 4, dans lequel on réalise la métallation du polymère organique en dissolvant le polymère concerné dans un solvant organique inerte, choisi parmi les hydrocarbures liquides, aliphatiques, cycloaliphatiques ou aromatiques, et en mettant la solution en contact avec un agent de métallation, choisi parmi les dérivés alkylés ayant 1 à 12 atomes de carbone, les hydrures et les amidures d'un métal alcalin choisi parmi Li, Na et K, à une température de 0°C à 80°C et pendant une durée de 30 minutes à 6 heures, la quantité d'agent de métallation étant de 0,1 mole à 1 mole pour chaque motif monomère du polymère concerné, éventuellement en présence d'un activateur choisi parmi la N,N,N ,N'-tétramêthyléthylènediamine, le tert.-butylate de potassium et le diazabicyclooctane, le rapport molaire de l'agent de métallation à l'activateur étant de 1:0,1 à 1:10.

6. Procédé selon la revendication 1, dans lequel on fait réagir le polymère organique métallé avec une quantité stoechiométrique du composé portant à la fois une fonction amine à empêchement stérique et une fonction carbonyle.
